# EUROPÄISCHE PATENTSCHRIFT

(11) **EP 1 936 056 B1**
(45) Veröffentlichungstag und Bekanntmachung des Hinweises auf die Patenterteilung: **07.01.2015**
(21) Anmeldenummer: 07022076.9
(22) Anmeldetag: 14.11.2007
(51) Int. Cl.: E04C 2/296, B32B 5/18, B32B 27/12, B32B 5/26

(54) **Flächiges Bauelement**
Flat building element
Elément de construction plat

(30) Priorität: 22.12.2006 DE 202006019663 U
(43) Veröffentlichungstag der Anmeldung: 25.06.2008
(73) Patentinhaber: Lux Elements GmbH & Co. KG, 51379 Leverkusen (DE)
(72) Erfinder: Lux, Thomas, 42799 Leichlingen (DE)
(74) Vertreter: Gudat, Axel

(56) Entgegenhaltungen:
- DE-U1-202006 005 694

## Beschreibung

Die Erfindung betrifft ein flächiges Bauelement nach dem Oberbegriff von Anspruch 1 mit einem Kern aus einem Kunststoffschaum, wobei der Kern eine erste und eine zweite großflächige Seite und eine Beschichtung auf jeder derselben aufweist, wobei die Beschichtung der ersten Seite eine grobmaschige Textillage aufweist und wobei die Beschichtung der zweite Seite eine Folienlage und eine auf der dem Kern zugewandten und/oder abgewandten Seite der Folie angeordnete Vlieslage aufweist.

Derartige Bauelemente, insbesondere in Form von Bauplatten, mit einem Kunststoffschaumkern und einer beidseitigen Beschichtung sind vielfältig bekannt und werden insbesondere als Verkleidungsplatten zum Innenausbau aber auch zur Verwendung im Außenbereich eingesetzt. Die Beschichtung kann hierbei auf vielfache Weise variieren und beispielsweise als Gewebelage, Vliesschicht, Papierlage oder dergleichen ausgeführt sein. Die Verbindung mit dem Kern kann ebenfalls auf vielfältige Weise variieren, beispielsweise durch eine Mörtelschicht, durch Verklebung, durch Aufkaschieren der Beschichtung auf die Kunststoffschaumplatte, durch Verschweißen der Beschichtung mit der Kunststoffschaumplatte, durch Einprägen der Gewebelage in in die Kunststoffschaumplatte eingebrachte Hinterschneidungen usw. Das Bauelement soll hierbei vielfältigen Anforderungen genügen. Zum einen soll es als Massenartikel kostengünstig herstellbar sein, zum anderen ein geringes Gewicht bei hoher Festigkeit bzw. Steifigkeit aufweisen. Des Weiteren soll das Bauelement zur Aufbringung einer Dekorschicht angepasst sein, wobei die Dekorschicht aus Fliesen, Tapete, Putz o. dgl. bestehen kann oder durch Auftrag einer flüssigen Beschichtung wie einer Farbe hergestellt wird. Ferner soll das Bauelement mit hoher Maßgenauigkeit hergestellt werden. An die Art und Weise der Aufbringung der Beschichtung sind hierbei besondere Anforderungen zu stellen, um ein Verziehen des Bauelementes zu verhindern, insbesondere auch ein nachträgliches Verziehen unter Umgebungsbedingungen wie bei Einwirken von Luftfeuchtigkeit bei ausreichend hohen Temperaturen und dergleichen. Es ist bereits vorgeschlagen worden, den Schaumstoffkern beidseitig mit einer Vlieslage zu beschichten, um so eine symmetrische Beschichtung auszubilden, die einer Neigung zum Verziehen der Bauplatte entgegenwirkt. Dies schränkt jedoch die Möglichkeiten der Ausgestaltung der Bauplatte ein.

Ferner ist es bei Verwendung von Bauplatten zum Innenausbau erwünscht, dass diese eine gewisse Schalldämmung aufweisen. Dies ist insbesondere der Fall, wenn die flächigen Bauelemente auf einem Ständerwerk befestigt werden, so dass ein massiver Untergrund wie z.B. eine gemauerte Wand nicht vorhanden ist. Die Schalldämmungswirkung einer derartigen Konstruktion ist oftmals unzureichend. In derartigen Fällen werden daher oftmals Bauplatten auf mineralischer Basis, wie z.B. Gipsplatten eingesetzt, die ein höheres Gewicht und damit eine bessere Schalldämmungswirkung aufweisen. Durch das erhöhte Gewicht sind jedoch Transport und Montage dieser Platten erschwert. Des Weiteren ist aufgrund der damit verbundenen Staubbelastung auch ein bauseitiges Zuschneiden derartiger Platten erschwert.

Die DE 20 2006 005 694 U1 beschreibt eine Bauplatte als Träger für eine Flächenbekleidung, bei welcher eine feuchtigkeitsbeständige Schaumstoffkernschicht beidseitig durch eine Beschichtung versteift ist und wobei die Beschichtung zumindest aus einem aufgeklebten oder verschweißten Vliesstoff, einem feinmaschigen Gewebe oder einem feinmaschigen Gestrick besteht. Im Speziellen kann auf beiden Seiten der Schaummstoffkernschichtplatte eine imprägnierte Papier- oder Kunststofffolie aufgeklebt sein, auf welcher zunächst eine Bahn aus einem Gitter- oder Gewebematerial und auf dieser eine Vliesstoffbahn aufgebracht ist.

Der Erfindung liegt somit der Aufgabe zugrunde, ein flächiges Bauelement zu schaffen, welches die oben genannten Probleme in ihrer Gesamtheit zufrieden stellend löst, insbesondere kostengünstig herstellbar ist, einfach transportier- und montierbar ist, eine Herstellung der Bauelemente bzw. einer Verkleidung mit hoher Maßgenauigkeit ermöglicht und insbesondere bei einer Befestigung auf einem Ständerwerk eine verbesserte Schalldämmung ermöglicht.

Die Aufgabe wird durch die Bereitstellung eines Bauelementes nach Anspruch 1 gelöst. Vorteilhafte Weiterbildungen ergeben sich aus den Unteransprüchen.

Dadurch, dass das Bauelement eine asymmetrische Beschichtung aufweist, bei welcher die erste großflächige Seite desselben mit einer grobmaschigen Textillage wie z.B. einer Gewebelage, Geflechtlage oder einem grobmaschigem Netz beschichtet ist und die gegenüberliegende Seite eine Folienlage und zumindest eine auf der dem Kern zu- und/oder abgewandten Seite angeordnete Vlieslage aufweist, kann das Bauelement überraschenderweise in besonderem Maße ein komplexes Anforderungsprofil erfüllen. Zum einen weist das Bauelement eine hohe Stabilität auf, zum anderen weist das Bauelement aufgrund der asymmetrischen Bauweise überraschenderweise auch gute Schalldämmungseigenschaften, insbesondere in Bezug auf Raumschall, auf, was bei einem Aufbau von Trennwänden, Raumteilern oder dergleichen mit einem Ständerwerk, auf welchem die erfindungsgemäßen Bauelemente befestigt sind, von besonderer Bedeutung ist. Ferner hat sich herausgestellt, dass die erfindungsgemäßen Bauelemente sowohl nach der Produktion als auch unter Einwirkung von Feuchtigkeit oder anderen Umgebungsbedingungen praktisch nicht dazu neigen, sich zu verziehen, so dass die entsprechenden Bauten mit hoher Maßgenauigkeit hergestellt werden können. Dies wird darauf zurückgeführt, dass sich die durch das Aufbringen der Gewebelage einerseits und der Folien/Vlieslage andererseits ergebenden möglichen Spannungen ausgleichen. Dies gilt in besonderem Maße dann, wenn die grobmaschige Textillage einerseits und die Vlieslage/Folienlage andererseits durch unterschiedliche Haftmittel an dem Schaumstoffkern befestigt sind, beispielsweise mittels Mörtel bzw. Dünnbettmörtel in Bezug auf die erste Beschichtungsseite und mittels Kunstharzklebern oder Polyurethanklebern in Bezug auf die zweite Beschichtungsseite. Auf der zweiten Beschichtungsseite kann auch ein mineralisches Haftmittel wie ein Mörtel oder auch ein Kunstharzmörtel eingesetzt werden. Der Haftvermittler ist hier bei flächig, vorzugsweise vollflächig, auf dem Kern aufgebracht. Zugleich kann durch die Folienlage das Bauelement die Eigenschaften einer Dampfbremse oder sogar eine hohe Wasserdampfdichtigkeit aufweisen oder praktisch wasserdampfdicht sein, so dass es auch in Nasszellen oder an Außenwänden von Bauwerken vorteilhaft einsetzbar ist.

Vorzugsweise weist die Beschichtung der zweiten Seite unmittelbar aufeinander folgend eine dem Kern zugewandte Vlieslage, eine Folienlage und eine dem Kern abgewandte Vlieslage auf, wobei die letztere zugleich die außenseitige Oberfläche des Bauelementes bilden kann. Die genannten Lagen können aneinander vollflächig insbesondere mittels einer Haftvermittlerschicht verbunden sein bzw. verklebt oder auch an der Folienlage aufkaschiert oder verschweißt sein. Hierdurch ist einerseits durch die Vlieslage eine besonders gute Haftung mit dem Schaumstoffkern gegeben, andererseits ist das Bauelement zur Aufbringung von Dekorschichten, wie Fliesen, Tapeten, Putz oder textilen Beschichtungen, Aufbringung von flüssigen Beschichtungen, wie Farben oder Lacke besonders angepasst. Des Weiteren sind in Kombination mit der gegenüberliegenden grobmaschigen Textilage günstigere Schalldämmungseigenschaften gegeben.

Die Fasern der außenseitigen Vlieslage können zumindest teilweise außenseitig frei liegend sein, so dass Fliesen oder Kacheln unmittelbar auf der außenseitigen Vlieslage mittels geeigneter Kleber befestigbar sind. Gegebenenfalls kann die außenseitige Vlieslage aber auch teilweise oder vollständig in einer Matrix eingebettet sein. Die Matrix kann eine mineralischen Matrix wie ein Mörtel, insbesondere auf Zementbasis, sein, ein Kunstharz, ein Kleber, ein Dünnbettmörtel oder dergleichen.

Sowohl verfahrenstechnisch als auch hinsichtlich der physikalischen Eigenschaften des Bauelementes hat es sich als besonders günstig erwiesen, wenn die dem Schaumstoffkern zugewandte Vlieslage unmittelbar flächig oder vollflächig auf diesem befestigt ist, insbesondere verklebt ist. Als Kleber sind insbesondere polymere Kleber, wie Kunstharze oder Polyurethankleber, oder mineralische Haftmittel wie Mörtel, insbesondere Zementmörtel, einsetzbar. Eine derartige Bauplatte ist günstig herstellbar und weist eine gute Haftung der Vlieslage an dem Schaumstoffkern auf, wobei gleichzeitig gute physikalische Eigenschaften, einschließlich Schalldämmungseigenschaften, resultieren. Durch geeignete Abstimmung mit der gegenüberliegenden Beschichtung kann bei asymmetrischem Bauelementaufbau ein Verziehen des Bauelementes praktisch vollständig vermieden werden. Gegebenenfalls kann die dem Schaumstoffkern zugewandte Vlieslage auch unmittelbar auf dem Schaumstoffkern aufkaschiert oder mit diesem verschweißt sein.

Vorteilhafterweise wird die Beschichtung der zweiten Seite des Schaumstoffkerns als Bahnenware aufgebracht, welche eine Folienlage und eine einseitig oder beidseitig angeordnete Vlieslage aufweist, so dass an dem Bauelement die Vlieslage auf der dem Kern zu- und/oder abgewandten Seite der Folie angeordnet ist.

Allgemein ist die Folienlage vorzugsweise als Dampfbremse, insbesondere Wasserdampfbremse, ausgeführt. Die Dampfbremswirkung kann gemäß DIN 4108 einem Sd-Wert von ≥ 75m oder ≥ 100m bis 1500m oder größer entsprechen, beispielsweise einem Sd-Wert ≥ 200m oder 300m. Der Sd-Wert kann auch ≥ 500m betragen, beispielsweise bis 1000m oder bis 1500m. Die Folienlage kann gegebenenfalls auch wasserdicht und/oder im Wesentlichen oder nahezu vollständig wasserdampfdicht ausgeführt sein. Die Folienlage kann aus einem thermoplastischen Material bestehen, beispielsweise aus Polyethylen oder Polypropylen, oder aus Polyurethan. Die Folienlage kann zumindest im Wesentlichen luftdicht sein.

Die Folie kann eine Stärke von 0,05 bis 2 mm, vorzugsweise 0,1 bis 1 mm oder 0,1 bis 0,5 mm aufweisen, ohne hierauf beschränkt zu sein. Insbesondere kann die Folie eine Stärke von ca. 0,2 mm aufweisen.

Die dem Kern zugewandte und/oder abgewandte Vlieslage der zweiten Beschichtungsseite kann eine Stärke von 0,05 bis 2-3 mm, vorzugsweise im Bereich von 0,1 bis 0,5 mm oder bis 1 mm, beispielsweise ca. 0,2 bis 0,5 mm aufweisen.

Sind beidseitig der Folie Vlieslagen vorgesehen, so können diese Vlieslagen aus demselben Material bestehen, gegebenenfalls jedoch auch aus unterschiedlichem Material, wobei sich die Materialien in ihrer Schichtdicke, ihrem Flächengewicht, dem Faserdurchmesser, der Faserlänge und/oder dem Ausmaß der Verschlingung der Fasern untereinander unterscheiden. Die Stärken der beidseitig der Folie angeordneten Vlieslagen können gleich oder verschieden voneinander sein.

Die grobmaschige Textillage der ersten Beschichtung kann als Gewebelage, Geflechtlage oder als Netzmaterial ausgeführt sein. Die Textilage ist vorzugsweise unmittelbar an dem Schaumstoffkern flächig, vorzugsweise vollflächig, befestigt. Insbesondere kann die Textillage der ersten Beschichtung mittels Dünnbettmörtel flächig auf dem Schaumstoffkern befestigt sein. Die Gewebelage kann hierbei bezogen auf ihre Schichtdicke nur teilweise in der Matrix, z.B. einem Dünnbettmörtel, eingebettet sein, so dass die Struktur der Gewebelage an dem Bauelement durch Augenscheinnahme wahrnehmbar ist. Die Einzelfasern der Textillage können hierbei vollständig von dem Matrixmaterial umgeben sein. Gegebenenfalls kann die Gewebelage auch vollständig in dem Matrixmaterial, z.B. einem Mörtel oder Dünnbettmörtel, eingebettet sein, wobei die Mörtelschichtdicke vorzugsweise im wesentlichen der Schichtdicke der Gewebelage entspricht aber auch größer sein kann. Die Matrix, insbesondere der Mörtel bzw. Dünnbettmörtel, ist vorzugsweise feuchtigkeitsbeständig ausgeführt.

Die grobmaschige Textillage weist vorzugsweise eine Maschenweite von 2 mm bis 30 mm, vorzugsweise von 3 mm bis 10 mm oder 20 mm, besonders bevorzugt ca. 5 mm auf, ohne hierauf beschränkt zu sein. Ferner weist die Textillage vorzugsweise ein Flächengewicht von 25 g/m2 bis 300 g/m2 oder auch bis 500 g/m2 oder ggf. auch größer, vorzugsweise von 50 oder 75 g/m2 bis 200 g/m2, auf, insbesondere ca. 100 g/m2. Sind die Fasern Textilfasern, so können diese ein Längengewicht von ca. 50 bis 500 tex, vorzugsweise 75 bis 350 tex, besonders bevorzugt 100-300 tex aufweisen. Die Textillage kann derartige Fasern aufweisen oder aus diesen bestehen.

Die grobmaschige Textillage kann als triaxiales Gewebe ausgeführt sein, bei welchem sich die Fasern in drei unterschiedlichen Richtungen erstrecken können. Zwei der gegebenen Richtungen können einen Winkel von 60° bis 120°, vorzugsweise ca. 90° zueinander einschließen. Die Dritte Richtung kann symmetrisch oder asymmetrisch zu den Fasern der ersten beiden Richtungen verlaufen. Hierdurch kann die Gewebelage Zugkräfte aus unterschieldichen Richtungen aufnehmen. Die Textillage kann auch als multiaxiales Gewebe ausgeführt sein, bei welchem sich die Fasern in mehr als drei Richtungen oder Vorzugsrichtungen erstrecken, beispielsweise in vier, fünf, sechs bis acht oder mehr Richtungen. Die Erstreckungsrichtungen können gleichmässig oder ungleichmässig über den Kreisumfang verteilt sein. Es versteht sich, dass anstelle des Gewebes jeweils auch ein tri-oder multiaxiales Geflecht oder Netz vorgeshen sein kann. Die sich in den einzelnen Richtungen erstreckenden Fasern können gleich oder verschieden ausgebildet sein.

Die grobmaschige Textilage und/oder die mindestens eine Vlieslage des Bauelementes, insbesondere die dem Schaumstoffkern zugewandte und/oder abgewandte Vlieslage der zweiten Seite, können Glasfasern enthalten oder aus Glasfasern bestehen. Die Glasfasern können alkalibeständig sein. Die Glasfasern können teilweise oder vollständig aus E- oder S-Glas bestehen. Der Anteil an Glasfasern bezogen auf das Flächengewicht des Fasermaterials kann ≥ 25 Gew.-%, vorzugsweise ≥ 50 Gew.-% oder ≥ 75 bis 90 Gew.-%, betragen. Gegebenenfalls können die Fasern auch aus anderem Material bestehen, wie beispielsweise Steinwolle, Polyethylen, Polypropylen oder Polyester. Die einzelnen Lagen der ersten und der zweiten Beschichtungsseite können hierbei aus gleichen oder unterschiedlichen Materialien bestehen. Gegebenenfalls können die Textillage aus einem anorganischen Material wie Glasfasern oder Steinwolle bestehen und die mindestens eine oder sämtliche Vlieslagen der zweiten Beschichtungsseite aus einem polymeren Material, wie Polyethylen, Polypropylen oder Polyester. Gegebenenfalls kann jedoch auch eine umgekehrte Materialzuordnung erfolgen, als oben beschrieben.

Gegebenenfalls kann die dem Schaumstoffkern zugewandte und/oder die abgewandte Vlieslage der zweiten Beschichtungsseite durch eine feinmaschige Gewebelage/Geflechtlage/Netz ersetzt sein, wobei deren Maschenweite und/oder deren Flächengewicht und/oder deren Faserstärke kleiner als die der grobmaschigen Textillage der ersten Beschichtungsseite ist. Maschenweite und/oder Faserstärke dieser Lage können ≤ 75 %, ≤ 50 % oder ≤ 25 % der der Textillage der ersten Beschichtungsseite sein. Im Falle einer Vlieslage der zweiten Seite kann deren Faserstärke ≤ 75 %, ≤ 50 % oder ≤ 25 % der der Textillage der ersten Seite sein.

Das Flächengewicht der Folien/Vlieslage (gegebenenfalls mit zwei Vlieslagen beidseitig der Folienlage) oder das Flächengewicht der Textillagen der zweiten Beschichtungsseite (einschließlich Folienlage) kann 100 g/m2 bis 500 g/m2 oder auch bis 600-700 g/m2, in besonderen Fällen auch bis 1.000-1.200 g/m2 betragen, vorzugsweise 200 bis 400 g/m2, insbesondere ca. 300 g/m2.

Das Verhältnis der Flächengewichte der grobmaschigen Textillage zu dem der die Folie enthaltenden Textil- bzw. Vlieslage der zweiten Seite kann ca. 1:1 bis 1:5 oder 1:10, vorzugsweise ca. 1:2 bis 1:4, insbesondere ca. 1:3 betragen, d.h. die die Folie enthaltende textile Beschichtung der zweiten Seite kann allgemein ein höheres Flächengewicht aufweisen als die textile Lage der ersten Seite. Gegebenenfalls kann das Flächengewicht der grobmaschigen Textillage auch größer als das der zweiten Beschichtung, die die Folie umfasst, sein.

Als besonders vorteilhaft hat es sich erwiesen, wenn die zweite Beschichtungsseite lediglich eine Folienlage und eine auf der dem Kern zugewandten und/oder abgewandten Seite angeordnete Vlieslage aufweist.

Die Textillage der ersten Beschichtungsseite kann außenseitig mit einer feinmaschigeren Gewebelage/Geflechtlage oder einer Vlieslage bedeckt sein, vorzugsweise weist die erste Beschichtungsseite lediglich die genannte eine Textillage auf.

Der Schaumstoffkern kann insbesondere aus einem geschlossenporigen Kunststoffmaterial, gegebenenfalls auch aus einem offenporigen Material, bestehen. Vorzugsweise besteht der Kunststoffkern aus Polystyrol.

Der Schaumstoffkern kann eine Stärke von 0,2 bis 10 cm, vorzugsweise 1 bis 3 cm oder bis 5 cm, aufweisen.

Vorzugsweise hat das Schaumstoffkernmaterial ein Raumgewicht von ≥ 30 kg/m3, besonders bevorzugt ≥ 40 kg/m3 oder ≥ 50 kg/m3 oder auch ≥ 60 kg/m3. Das Raumgewicht ist vorzugsweise ≤ 120-145 kg/m3, gegebenenfalls auch ≤ 100 kg/m3 oder ≤ 80-90 kg/m3. Das Schaumstoffmaterial kann hierbei Polystyrol darstellen oder dieses enthalten, z.B. in einem Gewichtsanteil ≥ 50% bezogen auf das Gesamtgewicht des Kerns. Vorzugsweise ist das Material expandiertes oder extrudiertes Polystyrol wie EPS. Allgemein kann das Schaumstoffkernmaterial Hartschaum sein.

Vorzugsweise werden die Lagen der zweiten Beschichtungsseite enthaltend oder bestehend aus der Folienlage und der ein- oder beidseitig aufgebrachten Vlieslage als vorgefertigtes Verbundmaterial zur Herstellung der Beschichtung verwendet, beispielsweise als Bahnenware. Vorzugsweise wird die Beschichtung der zweiten Seite unmittelbar unter Verwendung eines Haftvermittlers, wie eines Kunstharzes oder Polyurethanklebers, auf dem Schaumstoffkern befestigt.

Die einzelnen Lagen der zweiten Beschichtungsseite, insbesondere die textilen Lagen zusammen mit der Folienlage, können eine Gesamtstärke von 0,1 bis 5 mm, vorzugsweise 0,1 bis 2 mm, insbesondere ca. 0,5 bis 1 mm aufweisen. Dies kann sich insbesondere auch auf das oben genannte Verbundmaterial beziehen.

Ferner umfasst die Erfindung eine Baukonstruktion mit einem Ständerwerk, wobei das erfindungsgemäße Bauelement an dem Ständerwerk befestigt ist, vorzugsweise unmittelbar an diesem. Die Befestigung kann durch geeignete Kleber oder Mörtel oder mittels form- und/oder kraftschlüssiger Befestigungselemente wie Schrauben, Nägel oder dergleichen erfolgen.

Alternativ kann das erfindungsgemäße Bauelement auch auf einem Mauerwerk oder einem Wandbereich befestigt sein, beispielsweise mittels eines geeigneten Klebers oder Mörtels, insbesondere Dünnbettmörtel. Der Kleber oder Mörtel kann punktuell, streifenförmig oder flächig eingesetzt werden. Das Mauerwerk kann insbesondere einen Wandbereich darstellen.

Vorzugsweise wird das erfindungsgemäße Bauelement mit der ersten Beschichtungsseite, welche die grobmaschige Textilage aufweist, dem Mauerwerk/Ständerwerk bzw. der Wand zugewandt an diesem befestigt.

Werden zur Befestigung des Bauelementes an der Unterkonstruktion Befestigungsmittel wie Schrauben verwendet, welche die die Folie enthaltene zweite Beschichtungslage durchdringen, so werden die durchdrungenen Bereiche des Bauelementes vorzugsweise flächig mit einem als Wasserdampfsperre fungierenden Material wie einer aufgeklebten Folie oder Spachtelmasse flächig abgedichtet.

Die erfindungsgemäßen Bauelemente können insbesondere zum Innenausbau oder im Außenbereich eingesetzt werden. Die Bauelemente können gegebenenfalls auch im Bodenbereich eingesetzt werden, beispielsweise als Estrichersatz. Vorzugsweise ist das Bauelement unmittelbar mit einem mineralischen Untergrund verbunden, z.B. mittels eines Mörtels oder Klebers, gegebenenfalls kann unterhalb des Bauelementes eine weitere Funktionsschicht wie eine Wärmedämmschicht, Trittschalldämmung o. dgl. angeordnet sein. Die Nutzschicht, z.B. Fliesen, können unmittelbar oberhalb der erfindungsgemäßen Bauelemente aufgebracht und mittels eines Haftvermittlers verbunden sein. Die zweite Seite der Bauelemente ist hierbei vorzugsweise der Nutzschicht zugewandt. Die Fliesen können jeweils eine Fläche von ≥ 10X10 cm2 oder ≥ 20x20 cm2 aufweisen.

Vorzugsweise sind die erfindungsgemäßen Bauelemente als planparallele Platten gefertigt, so dass diese als Verkleidungselemente zur Herstellung von Wandflächen einsetzbar sind. Die Bauelemente sind vorzugsweise durchgehend, d.h. ohne Durchbrechung, ausgebildet. Die erste und/oder zweite Beschichtungslage stellen hierbei jeweils vorzugsweise eine durchgehende Beschichtung des Schaumstoffkerns dar.

Die Bauelemente sind vorzugsweise als Rechteckplatten ausgebildet, die ein Kantenverhältnis von ≥ 1,5 : 1 oder ≥ 2 : 1 oder ≥ 1 : 3 aufweisen. Die kleinere Kantenlänge kann im Bereich von 0,5 - 1,5 m oder bis 1m liegen.

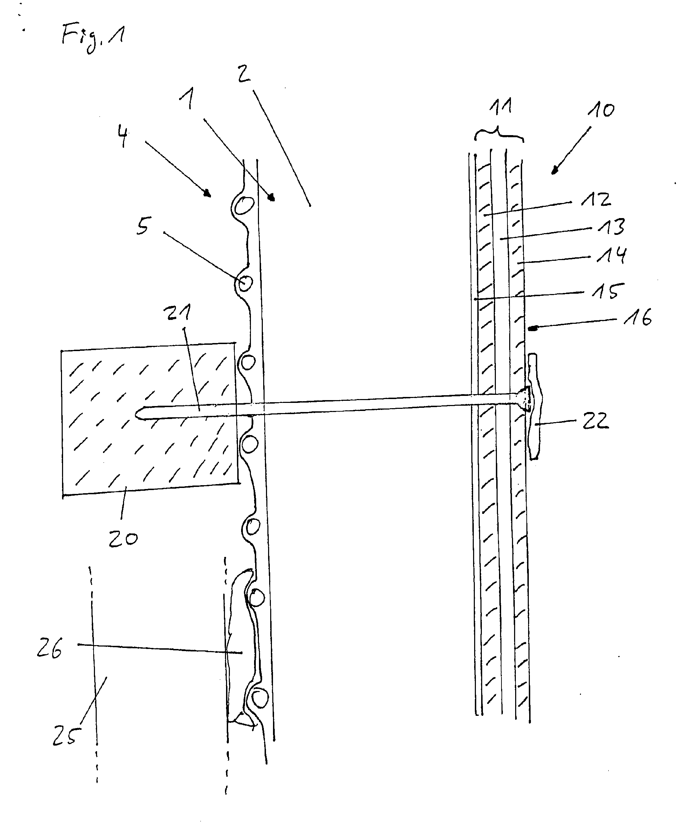

Die Erfindung wird nachfolgend beispielhaft beschrieben und an Hand der Figur erläutert.

Das erfindungsgemäße Bauelement 1 weist einen Kunststoffschaumkern 2 auf und ist als Bauplatte mit planparallelen Oberflächen 3 ausgeführt. Der Kern besteht nach dem Ausführungsbeispiel aus Polystyrol, welches geschlossenporig sein kann. Die Beschichtung der ersten Seite 4 des Bauelementes weist eine grobmaschige Textillage 5 in Form einer Gewebelage auf, die in einem Mörtel, wie z.B. einem Dünnbettmörtel, haftend mit dem Kern verbunden ist. Die Textillage 5 ist hierbei nicht vollständig eingebettet, so dass die Gewebestruktur durch Augenscheinnahme wahrnehmbar ist. Die Textillage 5 ist hierbei unmittelbar mit dem Kern 2 durch die Mörtel- oder gegebenenfalls einer geeigneten Kleberschicht verbunden. Das textile Material der ersten Beschichtung besteht aus einem Glasfasermaterial. Nach dem Ausführungsbeispiel umfasst die erste Beschichtungsseite keine weitere Lage eines textilen Materials und gegebenenfalls auch keine weitere Beschichtungslage.

Die Textillage 5 weist eine Maschenweite von ca. 0,5 cm und ein Flächengewicht von ca. 100 g/m² auf.

Die zweite Seite 10 des Bauelementes 1, welche bei einem an einem Untergrund wie einem Wandbereich, Mauer- oder Ständerwerk befestigtem Bauelement vorzugsweise nach außen hin gerichtet ist, weist eine Beschichtung 11 aus einem textilen Material auf, welches aus einer ersten Vlieslage 12, einer Folienlage 13 und einer zweiten, nach außen gerichteten Vlieslage 14 besteht. Das aus den Lagen 12, 13 und 14 (oder ggf. nur aus den Lagen 12, 13 oder 13, 14 bestehende Material) ist als vorgefertigtes Verbundmaterial an dem Kern befestigt, wobei das Material als Bahnenware aufgebracht sein kann. Die eine oder beiden Vlieslagen 12, 14 können mittels geeigneter Kleber oder Haftmittel mit der Folie 13 dauerhaft verbunden sein, die eine oder beide Vlieslagen können auch mit der Folie 13 verschweißt sein, wozu die Folie 13 vorzugsweise aus einem thermoplastischen Material wie beispielsweise Polyethylen oder Polypropylen besteht. Das Material zumindest einer oder beider Vlieslagen kann ebenfalls ein thermoplastische Material sein, beispielsweise Polypropylen. Die Folie 13 kann zumindest dampfbremsend, gegebenenfalls dampfsperrend, ausgebildet sein. Die Folie kann auch wasserdicht ausgebildet sein. Eine oder beide Vlieslagen, insbesondere die außenseitig angeordnete Vlieslage, können wasserabweisend ausgerüstet sein. Die erste Vlieslage 12 und die zweite Vlieslage 14 können aus demselben oder verschiedenen Material bestehen und die gleiche oder verschiedene Schichtstärken aufweisen.

Die Vlieslagen 12, 14 können eine Schichtstärke von ca. 0,2 mm aufweisen. Die Beschichtung 12 bestehend aus den Lagen 12, 13, 14 kann eine Gesamtstärke von ca. 0,4 bis 0,8 mm und ein Flächengewicht von ca. 300 g/m2 aufweisen.

Die Beschichtungslage 14 bzw. die dem Kern zugewandte Vlieslage 12 kann mittels einer Haftvermittlerschicht 15, insbesondere in Form eines Kunstharzes oder eines Polyurethanklebers oder auch eines Beschichtungsmörtels, vollflächig mit dem Kern verbunden sein.

Die Außenseite der Vlieslage 14 kann zumindest teilweise oder vollständig mit einem in die Poren des Vlieses teilweise oder vollständig eindringendem Material wie einem Mörtel, insbesondere Dünnbettmörtel oder einem Kunstharz versehen sein, wobei die Fasern der Vlieslage 14 teilweise außenseitig frei liegen können. Hierdurch ist die Außenseite des Bauelementes 1 besonders angepasst, um Fliesen oder Platten mittels geeigneter Kleber auf dem Bauelement 1 befestigen zu können. Sollen beispielsweise Tapeten, textile Materialien oder Putz auf die Bauplatte aufgeklebt werden oder die außenseitige Oberfläche 16 mit einer flüssigen Beschichtung wie einer Farbe oder einem Lack versehen werden, so kann die außenseitige Oberfläche 16 im wesentlichen glatt ausgebildet sein, so dass die Vlieslage 14 vollständig in dem geeignetem Matrixmaterial eingebettet ist.

Die Haftvermittlerschicht 15 kann eine Stärke aufweisen, wie sie zur Verklebung der Beschichtungslage 11 gerade ausreichend ist, gegebenenfalls kann die Haftvermittlerschicht 15 auch eine größere Schichtdicke aufweisen, was für besondere Anwendungsfälle von Vorteil sein kann.

Die erfindungsgemäße Bauplatte zeichnet sich durch eine hohe Stabilität in Verbindung mit verbesserten Schalldämmungseigenschaften aus, wobei die Bauplatte zugleich insbesondere aufgrund der Folienlage 13 als Dampfbremse oder auch Dampfsperre fungieren kann und wasserdicht oder im wesentlichen wasserdampfundurchlässige sein kann.

Zur Befestigung des Bauelementes an einem Ständerwerk 20 können geeignete Befestigungsmittel 21 wie Schrauben vorgesehen sein, welche das Bauelement vollständig durchdringen. Der außenseitige Kopf des Befestigungselementes kann hierbei vollflächig abgedichtet sein, beispielsweise durch eine Folie 22, die mit der äußeren Beschichtungslage, beispielsweise der Vlieslage 14 verklebt sein kann, gegebenenfalls kann auch eine Spachtelschicht vorgesehen sein.

Bei einer Befestigung des Bauelementes an einem Wandbereich 25 wie z.B. einem Mauerwerk kann dieses punktuell oder gegebenenfalls auch flächig mittels Klebestellen 26 aus Mörtel befestigt sein.

Das erfindungsgemäße Bauelement kann insbesondere an einer Innenseite einer Außenwand eines Gebäudes befestigt sein und hierdurch aufgrund der wasserdampfbremsenden Ausführung eine Schwitzwasserbildung zuverlässig vermeiden. Gegebenenfalls sind die Bauelemente auch in Nasszellen oder im Außenbereich einsetzbar.

### Bezugszeichenliste

- 1: Bauelement
- 2: Kern
- 4: erste Seite
- 5: grobmaschige Textillage
- 10: zweite Seite
- 11: Beschichtung
- 12: Vlieslage
- 13: Folienlage
- 14: Vlieslage
- 15: Haftvermittler
- 16: außenseitige Oberfläche
- 20: Ständerwerk
- 21: Befestigungselement
- 22: Folienabdichtung
- 25: Wandbereich
- 26: Klebestellen

## Patentansprüche

1. Flächiges Bauelement mit einem Kern (2) aus einem Kunststoffschaum, wobei der Kern (2) eine erste und eine zweite gegenüberliegende großflächige Seite und eine beidseitige Beschichtung auf diesen aufweist, wobei die Beschichtung der ersten Seite eine grobmaschige Textillage (5) aufweist, wobei die Beschichtung der zweiten Seite (10) eine Folienlage (13) und eine auf der dem Kern (2) zugewandten und/oder abgewandten Seite der Folie angeordnete Vlieslage (14) aufweist, **dadurch gekennzeichnet, dass** die Beschichtung asymmetrisch ausgebildet ist.

2. Bauelement nach Anspruch 1, **dadurch gekennzeichne**t, dass die Beschichtung der zweiten Seite (10), abgesehen von gegebenenfalls vorgesehenen Haftvermittlerschichten, unmittelbar aufeinander folgend eine dem Kern (2) zugewandte Vlieslage (12), eine Folienlage (13) und eine dem Kern (2) abgewandte Vlieslage (14) aufweist.

3. Bauelement nach Anspruch 1 oder 2, **dadurch gekennzeichnet, dass** die Fasern einer außenseitig angeordneten Vlieslage (14) zumindest teilweise außenseitig freiliegend sind.

4. Bauelement nach Anspruch 1 oder 2, **dadurch gekennzeichnet, dass** die Oberseite der Beschichtung (11) der zweiten Seite (10) des flächigen Bauelementes im Wesentlichen glatt ausgeführt ist.

5. Bauelement nach einem der Ansprüche 1 bis 4, **dadurch gekennzeichnet , dass** die dem Schaumstoffkern (2) zugewandte Vlieslage (12) der zweiten Seite, abgesehen von einer gegebenenfalls vorgesehenen Haftvermittlerschicht, unmittelbar auf dem Kern (2) befestigt ist.

6. Bauelement nach einem der Ansprüche 1 bis 5, **dadurch gekennzeichnet, dass** die Beschichtung der zweiten Seite (10) auf dem Schaumstoffkern (2) aufgeklebt ist.

7. Bauelement nach einem der Ansprüche 1 bis 6, **dadurch gekennzeichnet, dass** die Beschichtung der zweiten Seite (10) als Bahnenware aufgebracht ist.

8. Bauelement nach einem der Ansprüche 1 bis 7, **dadurch gekennzeichnet, dass** die Beschichtung der ersten und/oder zweiten Seite (4, 10) eine Stärke von 0,1 bis 5 Millimeter aufweist.

9. Bauelement nach einem der Ansprüche 1 bis 8, **dadurch gekennzeichnet, dass** die Folie eine Stärke von 0,05 bis 2 Millimeter aufweist.

10. Bauelement nach einem der Ansprüche 1 bis 9, **dadurch gekennzeichnet, dass** die grobmaschige Textillage (5) als Gewebelage, Geflechtlage oder Netz ausgebildet ist.

11. Bauelement nach einem der Ansprüche 1 bis 10, **dadurch gekennzeichnet , dass** die Textillage (5) der ersten Beschichtung unmittelbar an dem Schaumstoffkern (2) befestigt ist.

12. Bauelement nach einem der Ansprüche 1 bis 11, **dadurch gekennzeichnet, dass** die Textillage (5) der ersten Beschichtung mittels Mörtel befestigt ist.

13. Bauelement nach einem der Ansprüche 1 bis 12, **dadurch gekennzeichnet, dass** die grobmaschige Textillage (5) eine mittlere Maschenweite von 0,25 cm bis 2 cm aufweist.

14. Bauelement nach einem der Ansprüche 1 bis 13, **dadurch gekennzeichnet, dass** die grobmaschige Textilage (5) ein Flächengewicht von 25 g/m2 bis 500 g/m2 aufweist.

15. Bauelement nach einem der Ansprüche 1 bis 14, **dadurch gekennzeichnet, dass** die grobmaschige Textillage als triaxiales oder multiaxiales Material ausgebildet ist.

16. Bauelement nach einem der Ansprüche 1 bis 15, **dadurch gekennzeichnet, dass** das Schaumstoffkernmaterial ein Raumgewicht von ≥ 30 kg/m3 aufweist.

17. Bauelement nach einem der Ansprüche 1 bis 16, **dadurch gekennzeichnet, dass** die grobmaschige Textillage (5) und/oder die dem Kern (2) zugewandte Vlieslage (12) und/oder die dem Kern (2) abgewandte Vlieslage (14) Glasfasern enthält oder aus Glasfasern besteht.

18. Bauelement nach einem der Ansprüche 1 bis 17, **dadurch gekennzeichnet , dass** die dem Schaumstoffkern (2) zugewandte und/oder die diesem abgewandte Vlieslage (12, 14) durch eine Gewebelage ersetzt ist, deren Maschenweite und/oder Flächengewicht und/oder Faserstärke kleiner als die der grobmaschigen Textillage (5) der ersten Beschichtung ist.

19. Bauelement nach einem der Ansprüche 1 bis 18, **dadurch gekennzeichnet , dass** die Faserstärke der grobmaschigen Textillage (5) der ersten Seite größer als die von jeweils einer oder beider der Vlieslagen und/oder einer etwaigen anderen Textillage der zweiten Seite ist.

20. Bauelement nach einem der Ansprüche 1 bis 19, **dadurch gekennzeichnet, dass** das Flächengewicht der grobmaschigen Textillage (5) der ersten Seite kleiner als das der textilen Beschichtung der zweiten Seite, einschließlich der Folienlage, ist.

21. Bauelement nach einem der Ansprüche 1 bis 20, **dadurch gekennzeichnet , dass** der Schaumstoffkern (2) aus Polystyrol besteht.

22. Bauelement nach einem der Ansprüche 1 bis 21, **dadurch gekennzeichnet dass** das Bauelement (1) als rechteckförmige Platte mit einem Kantenverhältnis von 1,5 zu 1 oder größer ausgeführt ist.

23. Ständerwerk mit einem Bauelement nach einem der Ansprüche 1 bis 22, wobei das Bauelement (1) auf dem Ständerwerk (26) befestigt ist.

24. Wand mit einem Bauelement nach einem der Ansprüche 1 bis 21 wobei das Bauelement (1) als Verkleidungselement an der Wand befestigt ist.

## Claims

1. Flat building element having a core (2) of a plastics foam, the core (2) having a first a and second large face opposing each other and carries a double-sided cladding on said faces, the cladding of the first face presenting a coarse meshed textile layer (5), the cladding on the second face (10) presenting a foil layer (13) and a nonwoven layer (14) arranged on the side of the foil turned toward and/or away from said core (2), ***characterized* in that** the cladding is formed in an asymmetrical manner.

2. Building element according to claim 1, ***characterized* in that** the cladding of the second face (10) includes, apart from possible adhesion promoting layers that are provided, in direct succession a nonwoven layer (12) turned toward said core (2), a foil layer (13), and a foil layer (14) turned away from core (2).

3. Building element according to claim 1 or 2, ***characterized* in that** the fibers of an externally arranged nonwoven layer (14) are exposed on the outside, at least partially.

4. Building element according to claim 1 or 2, ***characterized* in that** the upper side of cladding (11) of second face (10) of said flat building element is substantially smooth.

5. Building element according to one of the claims 1 to 4, ***characterized* in that** the nonwoven layer (12) of the second face turned toward said foam material core (2) is, apart from a possible adhesion promoting layer that is provided, directly fixed to said core (2).

6. Building element according to one of the claims 1 to 5, ***characterized* in that** the cladding of the second face (10) is glued to said foam material core (2).

7. Building element according to one of the claims 1 to 6, ***characterized* in that** the cladding of the second face (10) is applied as a length of material.

8. Building element according to one of the claims 1 to 7, ***characterized* in that** the cladding of the first and/or second face (4, 10) has a thickness of 0.1 to 5 millimeters.

9. Building element according to one of the claims 1 to 8, ***characterized* in that** the foil has a thickness of 0.05 to 2 millimeters.

10. Building element according to one of the claims 1 to 9, ***characterized* in that** the coarse meshed textile layer (5) is formed as a woven layer, meshwork layer or as a web.

11. Building element according to one of the claims 1 to 10, ***characterized* in that** the textile layer (5) of the first cladding is fixed directly to the foam material core (2).

12. Building element according to one of the claims 1 to 11, ***characterized* in that** the textile layer (5) of the first cladding is fixed by means of mortar.

13. Building element according to one of the claims 1 to 12, ***characterized* in that** the coarse meshed textile layer (5) has a medium aperture of 0.25 cm to 2 cm.

14. Building element according to one of the claims 1 to 13, ***characterized* in that** the coarse meshed textile layer (5) has a surface weight of 25 g/m2 to 500 g/m2.

15. Building element according to one of the claims 1 to 14, ***characterized* in that** the coarse meshed textile layer is formed as a triaxial or multiaxial material.

16. Building element according to one of the claims 1 to 15, ***characterized* in that** the foam material core has a volumetric weight of ≥ 30 kg/m3.

17. Building element according to one of the claims 1 to 16, ***characterized* in that** the coarse meshed textile layer (5) and/or the nonwoven layer (12) turned toward core (2) and/or the nonwoven layer (14) turned away from core (2) contain glass fibers or are comprised of glass fibers.

18. Building element according to one of the claims 1 to 17, ***characterized* in that** the nonwoven layer (12, 14) turned toward and/or turned away from the foam material core (2) are replaced by a woven layer having an aperture and/or surface weight and/or a fiber diameter smaller than that of the coarse meshed textile layer (5) of the first cladding.

19. Building element according to one of the claims 1 to 18, ***characterized* in that** the fiber diameter of the coarse meshed textile layer (5) of the first face is larger than that of one or both of the nonwoven layers and/or a possible other textile layer of the second face.

20. Building element according to one of the claims 1 to 19, ***characterized* in that** the surface weight of the coarse meshed textile layer (5) of the first face is less than that of the textile cladding of the second face, the foil layer included.

21. Building element according to one of the claims 1 to 20, ***characterized* in that** the foam material core (2) consists of polystyrene.

22. Building element according to one of the claims 1 to 21, ***characterized* in that** the construction element (1) is in the form of a rectangular panel having a ratio of edges of or greater than 1.5 to 1.

23. Framework, comprising a building element according to one of the claims 1 to *22,* ***characterized* in that** the building element (1) is fixed on the framework (26).

24. Wall, having a building element according to one of the claims 1 to 21, wherein said building element (1) is fixed as a cladding element to said wall.

## Revendications

1. Élément de construction plat avec un coeur (2) en mousse de plastique, le coeur (2) présentant une première surface grande et une deuxième surface grande, l'une opposée à l'autre et portant un habillage des deux côtés de celles-ci, l'habillage du premier face comprenant une couche textile (5) à larges mailles et l'habillage du deuxième face (10) comprenant une couche de film plastique (13) et une couche de non-tissé (14) disposée sur le côté du film plastique tourné vers le et/ou détourné du coeur (2), ***caractérisé* en ce que** l'habillage est configuré d'une manière asymétrique.

2. Élément de construction selon la revendication 1, ***caractérisé* en ce que** l'habillage du deuxième côté (10) comporte en succession directe, sans compter des couches promotrices d'adhésion prévues le cas échéant, une couche de non-tissé (12) tournée vers le cceur (2), une couche de film plastique (13) et une couche de non-tissé (14) détournée du coeur (2).

3. Élément de construction selon la revendication 1 ou 2, ***caractérisé* en ce que** les fibres d'une couche de non-tissé (14) extérieure sont déchaussées extérieurement, au moins en partie.

4. Élément de construction selon la revendication 1 ou 2, ***caractérisé* en ce que** la face supérieure de l'habillage (11) du deuxième face (10) de l'élément de construction plat est essentiellement lisse.

5. Élément de construction selon l'une des revendications 1 à 4, ***caractérisé* en ce que** la couche de non-tissé (12) tournée vers le coeur (2) en mousse de plastique est fixée directement sur le coeur (2), sans compter une couche promotrice d'adhésion prévue le cas échéant.

6. Élément de construction selon l'une des revendications 1 à 5, ***caractérisé* en ce que** l'habillage de la deuxième face (10) est collé sur le coeur (2) en mousse de plastique.

7. Élément de construction selon l'une des revendications 1 à 6, ***caractérisé* en ce que** l'habillage de la deuxième face (10) est appliqué comme un matériel en bande.

8. Élément de construction selon l'une des revendications 1 à 7, ***caractérisé* en ce que** l'habillage de la première et/ou deuxième face (4, 10) a une épaisseur de 0,1 à 5 millimètres.

9. Élément de construction selon l'une des revendications 1 à 8, ***caractérisé* en ce que** le film plastique a une épaisseur de 0,05 à 2 millimètres.

10. Élément de construction selon l'une des revendications 1 à 9, ***caractérisé* en ce que** la couche textile (5) à larges mailles est en forme de couche de tissu, de couche de lacis ou en forme de filet.

11. Élément de construction selon l'une des revendications 1 à 10, ***caractérisé* en ce que** la couche textile (5) du premier habillage est fixée directement sur le coeur (2) en mousse de plastique.

12. Élément de construction selon l'une des revendications 1 à 10, **caractérisé en ce que** la couche textile (5) du premier habillage est fixée par le mortier.

13. Élément de construction selon l'une des revendications 1 à 12, ***caractérisé* en ce que** la couche textile (5) à larges mailles présente une largeur de maille moyenne de 0,25 cm à 2 cm.

14. Élément de construction selon l'une des revendications 1 à 13, ***caractérisé* en ce que** la couche textile (5) à larges mailles présente un poids superficiel de 25 g/m2 à 500 g/m2.

15. Élément de construction selon l'une des revendications 1 à 14, ***caractérisé* en ce que** la couche textile (5) à larges mailles est en forme d'un matériel triaxial ou multiaxial.

16. Élément de construction selon l'une des revendications 1 à 15, ***caractérisé* en ce que** le matériel du coeur (2) en mousse de plastique présente un poids volumique de ≥ 30 kg/m3.

17. Élément de construction selon l'une des revendications 1 à 16, ***caractérisé* en ce que** la couche textile (5) à larges mailles et/ou la couche de non-tissé (12) tournée vers le coeur (2) et/ou la couche de non-tissé (14) détournée du coeur (2) contiennent des fibres de verre ou consiste en fibres de verre.

18. Élément de construction selon l'une des revendications 1 à 17, ***caractérisé* en ce que** la couche de non-tissé (12, 14) tournée vers le et/ou détournée du coeur (2) en mousse de plastique est remplacée par une couche de tissu dont la largeur de maille et/ou le poids superficiel et/ou le diamètre de fibres sont inférieures à ceux-ci de la couche textile (5) à larges mailles du premier habillage.

19. Élément de construction selon l'une des revendications 1 à 18, ***caractérisé* en ce que** le diamètre de fibres de la couche textile (5) à larges mailles de la première face est supérieure à celle-ci de l'une ou des deux couches de non-tissé et/ou d'une autre couche éventuelle de la deuxième face.

20. Élément de construction selon l'une des revendications 1 à 19, ***caractérisé* en ce que** le poids superficiel de la couche textile (5) à larges mailles de la première face est inférieure au poids superficiel de l'habillage textile de la deuxième face, la couche de film plastique incluse.

21. Élément de construction selon l'une des revendications 1 à 20, ***caractérisé* en ce que** le coeur (2) en mousse de plastique consiste en le polystyrène.

22. Élément de construction selon l'une des revendications 1 à 21, ***caractérisé* en ce que** l'élément de construction (1) est en forme d'une plaque rectangulaire avec un rapport d'arêtes égal ou supérieur à 1,5 : 1.

23. Bâti support, comprenant un élément de construction selon l'une des revendications 1 à 22, ledit élément de construction (1) étant fixé sur le bâti (26).

24. Paroi, comprenant un élément de construction selon l'une des revendications 1 à 21, ledit élément de construction (1) étant fixé sur ladite paroi comme un élément de l'habillage.
